# EUROPEAN PATENT APPLICATION

(11) **EP 3 474 123 A1**
(43) Date of publication of application: **24.04.2019**
(21) Application number: 18201099.1
(22) Date of filing: 18.10.2018
(51) Int. Cl.: G06F 3/038, G06F 3/044, G06F 3/0354

(54) **WRITING DEVICE AND TOUCH SYSTEM**

(30) Priority: 19.10.2017 CN 201710978794; 18.12.2017 CN 201721767766 U
(71) Applicant: Coretronic Corporation, Hsin-Chu 300 (TW)
(72) Inventor: WU, Chia-Cheng, Hsin-Chu 300 (TW); KUO, Pen-Ning, Hsin-Chu 300 (TW)
(74) Representative: Ter Meer Steinmeister & Partner

(57) **Abstract**

A writing device including a conductive pen tube, a pen head and a conductive ink is provided. The conductive pen tube contains the conductive ink adapted to be erased. The conductive ink is electrically connected to the conductive pen tube. At least a part of an outside surface of the conductive pen tube contacting a user is a conductor. The pen head is connected to the conductive pen tube. The pen head is used for outputting the conductive ink to a writing surface to form a physical handwriting on the writing surface. When the pen head contacts the writing surface, the writing surface generates a signal.

## Description

### BACKGROUND OF THE INVENTION

### Field of the Invention

The invention relates to a writing device and a touch system, and particularly relates to a writing device having a pen tube containing a conductive ink and a touch system.

### Description of Related Art

Appearance rate of panels having a touch function in the market is increased year by year. Many products, such as mobile phones, tablet computers, vehicle panels, electronic whiteboards, etc., are combined with the technique of touch panel, such that a trajectory of a touch body (for example, a finger or a stylus) on the panel may be transformed into trajectory information stored in hardware.

Presently, a writing device with a conductive touch head set on an ink pen is provided. When the ink pen leaves ink handwriting on a writing surface, the conductive touch head may contact the writing surface and generate a touch signal. However, the conductive touch head set on the ink pen probably wears the physical ink handwriting written on the writing surface by the ink pen, which causes use inconvenience of the writing device. Therefore, a technique for resolving the above problem is required.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE INVENTION

The invention is directed to a writing device, which is adapted to make a writing surface to generate a signal while forming a physical handwriting on the writing surface.

The invention provides a touch system including the writing device, and the writing device is adapted to make a writing surface to generate a signal while forming a physical handwriting on the writing surface.

The object is solved by the features of the independent claims. Preferred embodiments are given in the dependent claims.

At least one embodiment of the invention provides a writing device including a conductive pen tube, a pen head and a conductive ink. The conductive pen tube contains the conductive ink adapted to be erased. The conductive ink is electrically connected to the conductive pen tube. At least a part of an outside surface of the conductive pen tube contacting a user is a conductor. The pen head is connected to the conductive pen tube. The pen head is used for outputting the conductive ink to a writing surface to form a physical handwriting on the writing surface. When the pen head contacts the writing surface, the writing surface generates a signal.

Preferably, the pen head comprises a non-conductor.

Preferably, the pen head comprises a conductor.

Preferably, the writing device further comprises a back cap, wherein the pen head and the back cap are respectively connected to two opposite ends of the conductive pen tube.

Preferably, the back cap comprises a conductor.

Preferably, the writing device further comprises an identification code disposed on the conductive pen tube.

At least one embodiment of the invention provides a touch system including a writing surface and at least one writing device. The writing device includes a conductive pen tube, a conductive ink and a pen head. The conductive pen tube contains the conductive ink adapted to be erased. The conductive ink is electrically connected to the conductive pen tube. At least a part of an outside surface of the conductive pen tube contacting a user is a conductor. The pen head is connected to the conductive pen tube. The pen head is used for outputting the conductive ink to the writing surface to form a physical handwriting on the writing surface. When the pen head contacts the writing surface, the writing surface generates a signal.

Preferably, the pen head comprises a non-conductor.

Preferably, the pen head comprises a conductor.

Preferably, the writing device further comprises a back cap, wherein the pen head and the back cap are respectively connected to two opposite ends of the conductive pen tube.

Preferably, the back cap comprises a conductor.

Preferably, the touch system further comprises a wiping device used for wiping the physical handwriting on the writing surface.

Preferably, the wiping device comprises: a casing, a plurality of sensing elements and a wiping body, wherein the casing comprises a conductive material, the sensing elements are respectively electrically connected to the casing, the sensing elements are separated from each other, and the wiping body is located on the sensing elements. At least a part of the wiping body comprises an insulation material. When the wiping device contacts the writing surface, at least two of the sensing elements make the writing surface to generate a wiping function command.

Preferably, the touch system further comprises a computer device electrically connected to the writing surface, wherein the computer device generates an electronic handwriting according to the signal.

Preferably, the touch system further comprises at least two writing devices, wherein the pen heads of the at least two writing devices respectively have different sizes, and when the at least two writing devices contact the writing surface, signals of different signal intensities are generated, and the computer device identifies the at least two writing devices according to the signals of different signal intensities.

Preferably, the touch system further comprises at least two writing devices, wherein the conductive pen tubes of the at least two writing devices respectively have different electrical conductivity coefficients, and when the at least two writing devices contact the writing surface, signals of different signal intensities are generated, and the computer device identifies the at least two writing devices according to the signals of different signal intensities.

Preferably, the touch system further comprises at least two writing devices, wherein the conductive inks of the at least two writing devices respectively have different electrical conductivity coefficients, and when the at least two writing devices contact the writing surface, signals of different signal intensities are generated, and the computer device identifies the at least two writing devices according to the signals of different signal intensities.

Preferably, the touch system further comprises an identification code and an identification code reader. The identification code is disposed on the conductive pen tube. The identification code reader is electrically connected to the computer device. The identification code reader is located within a position range capable of reading the identification code. When the pen head contacts the writing surface, the identification code reader reads the identification code, and identifies a type of the writing device trough the computer device.

Preferably, the writing surface comprises a touch device and a reflective material layer located on the touch device, and the touch system further comprises a projection apparatus. The projection apparatus is configured to project an image on the reflective material layer.

Preferably, the writing surface comprises a touch device and a transparent material layer located on the touch device, and the touch system further comprises a display device, wherein the touch device is located between the display device and the transparent material layer.

At least one effect of the invention is to make the writing surface to generate the signal when the writing device containing the conductive ink contacts the writing surface.

At least one effect of the invention is to improve use convenience of the writing device.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1A and FIG. 1B are schematic diagrams of a writing device according to an embodiment of the invention.
FIG. 2A and FIG. 2B are schematic diagrams of a wiping device according to an embodiment of the invention.
FIG. 3 is a schematic diagram of a touch system acc. to an embodiment of the invention.
FIG. 4 is a schematic diagram of a touch system acc. to an embodiment of the invention.
FIG. 5 is a schematic diagram of a touch system acc. to an embodiment of the invention.

### DESCRIPTION OF EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

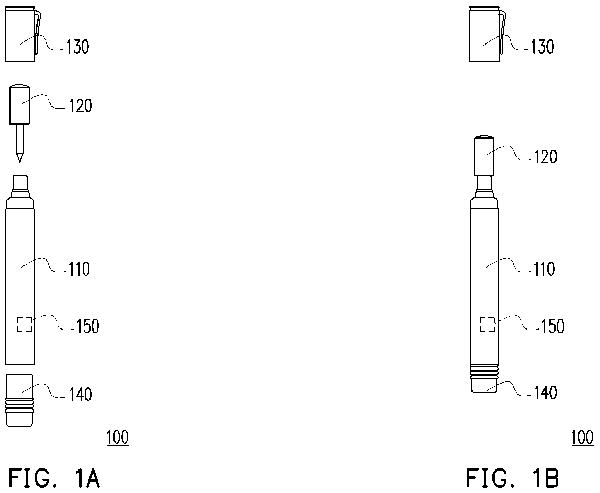

FIG. 1A and FIG. 1B are schematic diagrams of a writing device according to an embodiment of the invention.

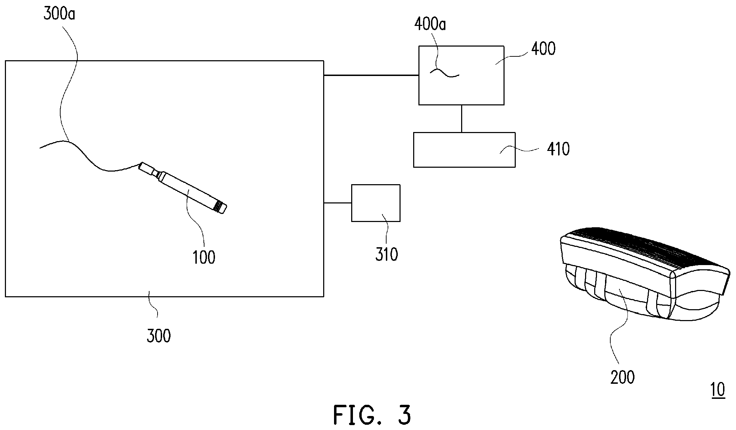

Referring to FIG. 1A and FIG. 1B, the writing device 100 is adapted to a writing surface having a capacitive touch function. The writing surface, for example, applies a projected capacitive touch (PCT) technique. The writing device 100 is, for example, applied to a writing surface 300 of FIG. 3, and detail thereof is described later. The writing device 100 includes a conductive pen tube 110, a pen head 120 and a conductive ink adapted to be erased.

The conductive pen tube 110 contains the conductive ink adapted to be erased. The conductive ink adapted to be erased refers to that the conductive ink may be directly erased from the writing surface in a general manner (for example, directly erased by using an eraser or a cleaning cloth) without using an organic solvent or other cleaner. An electrical conductivity coefficient (i.e. resistivity, and Ω·m is taken as a measuring unit) of the conductive ink is, for example, 0 Ω·m-35 KΩ·m. A material of the conductive ink, for example, includes a volatile organic solvent and a colorant, where the volatile organic solvent is, for example, ethyl alcohol, and the colorant is, for example, a pigment or a dye, which contains a compound that is soluble in water and makes the water solution conductive, for example, a trace salt (for example, NaCl, C6H8O7(citric acid)), granulated sugar, etc. Generally, by adjusting a ratio between the volatile organic solvent and the colorant, the electrical conductivity coefficient of the conductive ink is set, so as to achieve an effect that the writing surface having the capacitive touch function may generate a signal.

At least a part of an outside surface of the conductive pen tube 110 contacting with a user is a conductor. In some embodiment, the conductive pen tube 110 may include a conductive paint or a conductive sticker located on the surface thereof, so as to improve a whole electrical conductivity and aesthetics of the writing device 100.

The conductive ink is electrically connected to the conductive pen tube 110. The user holds the writing device 100 in one hand so as to be electrically connected to the conductive ink through the conductive pen tube 110. The pen head 120 is adapted to output the conductive ink to the writing surface to form a physical handwriting on the writing surface. When the pen head 120 contacts the writing surface, the physical handwriting is formed on the writing surface, and a position of the writing surface contacting the pen head 120 has a capacitance variation to generate a signal. An electrical conductivity coefficient of the conductive pen tube 110 and the electrical conductivity coefficient of the conductive ink may influence a signal intensity of the signal generated by the writing surface when the pen head 120 contacts the writing surface.

The pen head 120 is connected to the conductive pen tube 110. A material of the pen head 120 may be a material of a pen head of a general whiteboard pen, which may include a cotton core or other similar material. In some embodiment, the pen head 120 includes a non-conductor. When the pen head 120 contacts the writing surface, the writing surface is electrically connected to the conductive pen tube 110 through the conductive ink. In some embodiments, the pen head 120 includes a conductor, and an electrical conductivity coefficient of the pen head 120 may influence the signal intensity of the signal generated by the writing surface when the pen head 120 contacts the writing surface. In some embodiments, an ink absorption amount, a shape and a size of the pen head 120 may also influence the signal intensity of the signal generated by the writing surface when the pen head 120 contacts the writing surface. Further, the shape and the size (for example, a width of 3 mm to 22 mm) of the pen head 120 may influence a contact area between the pen head 120 and the writing surface, and the contact area between the pen head 120 and the writing surface may influence the signal intensity of the signal generated by the writing surface when the pen head 120 contacts the writing surface. Therefore, the shape and the size of the pen head 120 may influence the signal intensity of the signal generated by the writing surface when the pen head 120 contacts the writing surface. In some embodiment, the pen head 120 is, for example, detachable, and is adapted to be combined with or separated from the conductive pen tube 110.

The pen head 120 may adsorb the conductive ink from the conductive pen tube 110, and the conductive ink may be desorbed (detached) from the pen head 120 to leave the physical handwriting on the writing surface, and the above adsorption and desorption mechanism is the same to a principle of using the general whiteboard pen to write. In some embodiments, the pen head 120 is deformed after being pressed. However, the deformed pen head 120 still has the function of leaving the physical handwriting on the writing surface. In the embodiment, the writing device 100 may make the writing surface to generate the signal without additionally adding a touch pen cover, so that a chance of wearing the physical ink handwriting written on the writing surface by the pen head 120 of the writing device 100 is decreased, so as to improve the use convenience of the writing device 100.

In some embodiments, the writing device 100 further includes a back cap 140, and the pen head 120 and the back cap 140 are respectively connected to two opposite ends of the conductive pen tube 110. The back cap 140 is, for example, detachable, and is adapted to be combined with or separated from the conductive pen tube 110. After the back cap 140 is separated from the conductive pen tube 110, the conductive ink may be filled in the conductive pen tube 110. In some embodiments, a material of the back cap 140 includes a conductor.

In some embodiments, the conductive ink may flow in the conductive pen tube 110, and may form a signal conduction network with the pen head 120 an internal structure of the conductive pen tube 110 and/or the back cap 140.

In some embodiments, when the writing device 100 contacts the writing surface, the writing surface may have a predetermined capacitance variation to form a signal of a predetermined intensity range, and the predetermined intensity range is determined according to the electrical conductivity coefficients of various components in the writing device 100, the electrical conductivity coefficient of the conductive ink and the ink adsorption amount and size the pen head 120. Different types of the writing device 100 may have different predetermined intensity ranges due to different capacitance variations, so that the type of the writing device 100 contacting the writing surface may be identified according to the intensity of the signal generated by the writing surface. The amount of the conductive ink in the conductive pen tube 110 may influences the signal intensity of the signal generated by the writing surface. In some embodiments, the predetermined intensity range of the same type of the writing device 100 covers the signal intensity measured when the conductive pen tube 110 is fully filled with the conductive ink and the signal intensity measured when the conductive ink in the conductive pen tube 110 is just used out, though the invention is not limited thereto.

In some embodiments, the writing device 100 further includes an identification (ID) code 150, and the ID code 150 is, for example, applied for a radio frequency identification (RFID) technique. The ID code 150 is disposed on the conductive pen tube 110. Besides that the type of the writing device 100 contacting the writing surface may be identified according to the intensity of the signal generated by the writing surface, an ID code reader may also be applied to read the ID code 150 to identify the type of the writing device 100.

In some embodiments, the writing device 100 may selectively include a pen cap 130. When the writing device 100 is not used, the pen cap 130 may cover the pen head 120, such that the conductive ink is less likely to be lost due to volatilization.

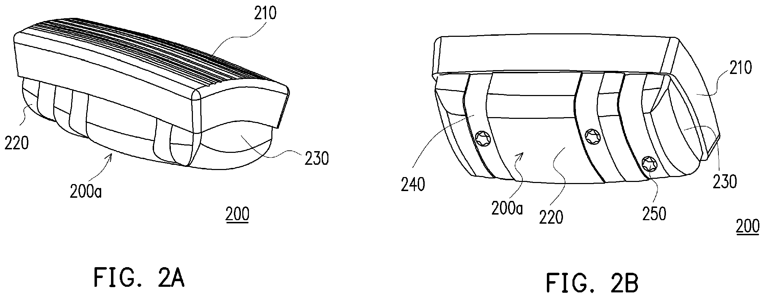

FIG. 2A and FIG. 2B are schematic diagrams of a wiping device according to an embodiment of the invention.

Referring to FIG. 2A and FIG. 2B, the wiping device 200 is adapted to the writing surface having the capacitive touch function. The wiping device 200 includes a casing 210, a plurality of sensing elements 250 and a wiping body 220. The wiping device 200 is, for example, applied to the writing surface 300 of FIG. 3, which is described in detail later.

The casing 210 includes a conductive material. A geometric shape of the casing 210 may be adjusted according to an actual requirement, for example, a square, a rectangle, a round, other geometric shape, a combination of a plurality of geometric shapes or a shape adapted to be held by the user.

In an embodiment, the casing 210 includes a magnetic material or a non-magnetic material, when the casing 210 and the writing surface all have a magnetic property, a wiping surface 200a of the wiping device 200 may be more parallel with the writing surface based on the principle of opposite poles attract of permanent magnets, so as to mitigate a wrong interpretation of the writing surface due to an uneven exerting force when the user performs a wiping operation.

The sensing elements 250 include a conductive material, and are respectively electrically connected to the casing 210. In the embodiment, the wiping device 200 includes connection elements 240, and the sensing elements 250 are electrically connected to the casing 210 through the connection elements 240. As shown in FIG. 2A and FIG. 2B, the number of the connection elements 240 is the same to the number of the sensing elements 250, i.e. each of the sensing elements 250 is electrically connected to the casing 210 through the corresponding connection element 240, though the invention is not limited thereto.

T the sensing elements 250 are separated from each other. A space between each of the sensing elements 250 is, for example, greater than 1.5 cm. When the wiping device 200 contacts the writing surface, the writing surface senses at least two of the sensing elements 250, and correspondingly generates a wiping function command. In some embodiments, the writing surface may sense three or more sensing elements 250 of the wiping device 200 to generate the wiping function command. Arranging positions, the amount, geometric shapes and electrical conductivity coefficients of the sensing elements 250 may be adjusted according to a requirement of the capacitance variation. The sensing elements 250 are, for example, capacitive sensing sheets, however, the sensing elements 250 of the invention are not limited to be sheet-like, and the sensing elements 250 may have any geometric shapes.

In some embodiments, at least one of the sensing elements 250 has a different shape compared with other sensing elements 250, especially the geometric shape of the part of the sensing element 250 close to the wiping surface 200a. Since the sensing elements 250 of different shapes may make the writing surface to generate different touch signals (for example, touch signals of different intensities), relative positions of the sensing elements 250 with different geometric shapes may be determined according to the capacitance variation. Then, a wiping displacement amount, a wiping displacement angle, a wiping rotation angle and/or a wiping press/release stress of the wiping device 200 are calculated by using trigonometric functions and differential integral functions.

In some embodiments, at least one of the sensing elements 250 has a different electrical conductivity coefficient compared with other sensing elements 250. Since the sensing elements 250 of different electrical conductivity coefficients may make the writing surface to generate different touch signals (for example, touch signals of different intensities), relative positions of the sensing elements 250 with different electrical conductivity coefficients may be determined according to the capacitance variation. Then, a wiping displacement amount, a wiping displacement angle, a wiping rotation angle and/or a wiping press/release stress of the wiping device 200 are calculated by using trigonometric functions and differential integral functions.

In an embodiment, each of the sensing elements 250 includes a magnetic material or a non-magnetic material, when the sensing elements 250 and the writing surface all have a magnetic property, the wiping surface 200a of the wiping device 200 may be more parallel with the writing surface based on the principle of opposite poles attract of permanent magnets, so as to mitigate a wrong interpretation of the writing surface due to an uneven exerting force when the user performs the wiping operation.

The wiping body 220 is located on the sensing elements 250. The wiping body 250 is used for wiping a physical handwriting on the writing surface, for example, an ink handwriting or handwriting of other pigments. At least a part of the wiping body 220 includes an insulation material. In the embodiment, the entire wiping body 220 is an insulation material, though the invention is not limited thereto. In some embodiments, the part of the wiping body 220 corresponding to the sensing elements 250 may include conductive materials, and the part of the wiping body 220 not corresponding to the sensing elements 250 is the insulation material. The conductive materials on the wiping body 220 are, for example, separated from each other, such that when the wiping device 200 contacts the writing surface, signals of different positions (or separated signals) are generated through the sensing elements 250 and the part of the wiping body 220 corresponding to the sensing elements 250, so as to enable the wiping function command. In some embodiments, the wiping device 200 includes a replaceable wiping body 220, such that the wiping body 220 is easy to be cleaned, replaced and repaired.

In an embodiment, the wiping body 220 includes a magnetic material or a non-magnetic material, when the wiping body 220 and the writing surface all have a magnetic property, the wiping surface 200a of the wiping device 200 may be more parallel with the writing surface based on the principle of opposite poles attract of permanent magnets, so as to mitigate a wrong interpretation of the writing surface due to an uneven exerting force when the user performs the wiping operation.

The wiping device 200 may selectively include an electrical isolation element 230. The electrical isolation element 230 is located between the casing 210 and the wiping body 220. In the embodiment, the electrical isolation element 230 is disposed between the sensing elements 250 and the casing 210, such that the sensing elements 250 may only be electrically connected to the casing 210 through the connection elements 240, and the wiping body 220 may cover the sensing elements 250 and the electrical isolation element 230. The sensing elements 250 spaced from the writing surface by the wiping body 220 make the writing surface to generate the touch signals. When the wiping device 200 contacts the writing surface, at least two of the sensing elements 250 make the writing surface to generate the touch signals to enable the wiping function command, such that the wiping device 200 may wipe the physical handwriting (i.e. ink handwriting) on the writing surface, and meanwhile delete an electronic handwriting corresponding to the physical handwriting according to the wiping function command.

In some embodiments, the electrical isolation element 230 includes a buffer isolation material, and the electrical isolation element 230, for example, has a soft characteristic. The electrical isolation element 230 may change its own shape, figure in collaboration with a posture of the user, so as to keep an angle between the wiping surface 200a of the wiping device 200 and the writing surface. In some embodiments, the more the wiping device 200 and the writing surface are fit to each other, the more the sensing elements 250 in the wiping device 200 are parallel to the writing surface, and the better effect that the writing surface detects correct positions of the sensing elements 250. In some embodiments, a thickness of the electrical isolation element 230 is greater than 1 cm, so as to effectively isolate improper sensing of the casing 210 and the writing surface.

In an embodiment, the electrical isolation element 230 includes a magnetic material or a non-magnetic material, when the electrical isolation element 230 and the writing surface all have a magnetic property, the wiping surface 200a of the wiping device 200 may be more parallel with the writing surface based on the principle of opposite poles attract of permanent magnets, so as to mitigate a wrong interpretation of the writing surface due to an uneven exerting force when the user performs the wiping operation.

FIG. 3 is a schematic diagram of a touch system according to an embodiment of the invention. It should be noted that the embodiment of FIG. 3 adopts the reference numbers of the components and a part of contents of the embodiments of FIG. 1A, FIG. 1B, FIG. 2A and FIG. 2B, where the same reference numbers denote the same or like components, and descriptions of the same technical contents are omitted. The aforementioned embodiment can be referred for descriptions of the omitted parts, and detailed descriptions thereof are not repeated in the following embodiment.

Referring to FIG. 3, the touch system 10 includes at least one writing device 100, the wiping device 200, a writing surface 300, a computer device 400, an ID code reader 310. When the pen head of the writing device 100 contacts the writing surface 300, a physical handwriting 300a is left on the writing surface 300, such that the writing surface 300 generates a signal.

The writing surface 300 has a capacitive touch function. The computer device 400 is electrically connected to the writing surface 300, and the signal generated by the writing surface 300 is transmitted to the computer device 400. When the writing device 100 moves on the writing surface 300, the writing surface 300 may sense a moving trajectory of the writing device 100 to generate a signal, and the computer device 400 generates an electronic handwriting 400a corresponding to the moving trajectory of the writing device 100 according to the signal generated by the writing surface 300. The computer device 400 is, for example, a desktop computer, a notebook computer or other device capable of generating images and receiving user input information.

In some embodiments, the touch system 10 includes at least two types of writing devices 100. The pen heads of the at least two types of writing devices 100 respectively have different sizes, and when the at least two types of writing devices 100 contact the writing surface 300, the writing surface 300 may generate signals of different signal intensities. The computer device 400 may identify the respective types of the at least two types of writing devices 100 according to the different signal intensities.

In some embodiments, the touch system 10 includes at least two types of writing devices 100. The conductive pen tubes of the at least two types of writing devices 100 respectively have different electrical conductivity coefficients, and when the at least two types of writing devices 100 contact the writing surface 300, the writing surface 300 may generate signals of different signal intensities. The computer device 400 may identify the respective types of the at least two types of writing devices 100 according to the different signal intensities.

In some embodiments, the touch system 10 includes at least two types of writing devices 100. The conductive inks of the at least two types of writing devices 100 respectively have different electrical conductivity coefficients, and when the at least two types of writing devices 100 contact the writing surface 300, the writing surface 300 may generate signals of different signal intensities. The computer device 400 may identify the respective types of the at least two types of writing devices 100 according to the different signal intensities.

The ID code reader 310 is electrically connected to the computer device 400. The ID code reader 310 is located within a position range capable of reading the ID code of the writing device 100. The ID code reader 310 is, for example, adapted to emit a radio wave to the ID code of the writing device 100, and the ID code of the writing device 100 passively emits an electromagnetic wave to respond the ID code reader 310. In some embodiments, the ID code reader 310 may read the electromagnetic wave actively emitted by the ID code of the writing device 100. In some embodiments, the software in the computer device 400 may be set to instruct the ID code reader 310 to operate when the pen head of the writing device 100 contacts the writing surface 300. The ID code reader 310 may transmit information carried by the electromagnetic wave passively or actively emitted by the ID code to the computer device 400, and the computer device 400 may process and identify the aforementioned information through the software therein, so as to identify the type of the writing device 100. When the pen head of the writing device 100 contacts the writing surface 300, besides that the type of the writing device 100 may be identified according to the signal intensity of the signal generated by the writing surface, the type of the writing device 100 contacting the writing surface 300 may also be identified through the ID code of the writing device 100.

In some embodiment, the computer device 400 may be electrically connected to an expansion device 410, where the expansion device 410, for example, includes tools used for operating the computer device 400 such as a keyboard, a mouse, a handwriting board, a drawing board, a touch board, keys, etc.

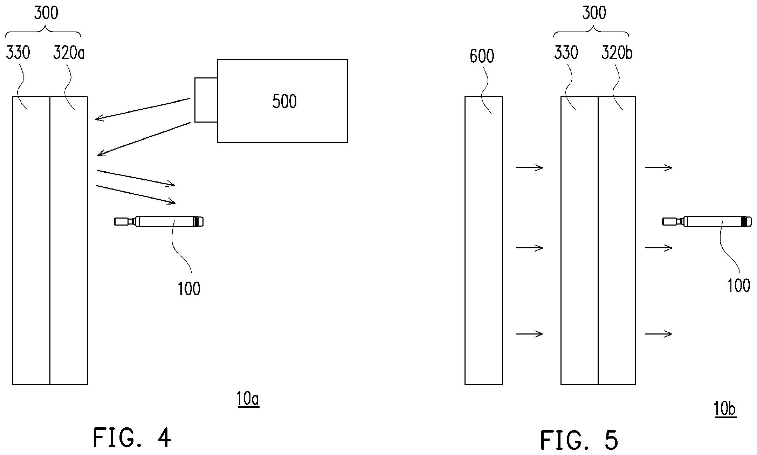

FIG. 4 is a schematic diagram of a touch system according to an embodiment of the invention. It should be noted that the embodiment of FIG. 4 adopts the reference numbers of the components and a part of contents of the embodiments of FIG. 3, where the same reference numbers denote the same or like components, and descriptions of the same technical contents are omitted. The aforementioned embodiment can be referred for descriptions of the omitted parts, and detailed descriptions thereof are not repeated in the following embodiment.

Referring to FIG. 4, the writing surface 300 includes a touch device 330 and a reflective material layer 320a located on the touch device 330. When the writing device 100 contacts the writing surface 300, the writing device 100 may leave physical ink handwriting on the reflective material layer 320a, and the touch device 330 may generate a signal corresponding to the writing device 100.

In the embodiment, the touch system 10a further includes a projection apparatus 500. The projection apparatus 500 is used for projecting an image on the reflective material layer 320a, where the reflective material layer 320a is, for example, a white reflective material layer, and is used for reflecting the image projected by the projection apparatus 500 to the user (not shown). Therefore, the user may use the writing device 100 to write on the reflective material layer 320a in collaboration with the image projected by the projection apparatus 500.

FIG. 5 is a schematic diagram of a touch system according to an embodiment of the invention. It should be noted that the embodiment of FIG. 5 adopts the reference numbers of the components and a part of contents of the embodiments of FIG. 3, where the same reference numbers denote the same or like components, and descriptions of the same technical contents are omitted. The aforementioned embodiment can be referred for descriptions of the omitted parts, and detailed descriptions thereof are not repeated in the following embodiment.

Referring to FIG. 5, the writing surface 300 includes the touch device 330 and a transparent material layer 320b located on the touch device 330. The touch device 330 is also light-pervious. When the writing device 100 contacts the writing surface 300, the writing device 100 may leave physical ink handwriting on the transparent material layer 320b, and the touch device 330 may generate a signal corresponding to the writing device 100.

In the present embodiment, the touch system 10b further includes a display device 600. The touch device 330 is located between the display device 600 and the transparent material layer 320b. An image displayed by the display device 600 may penetrate through the writing surface 300. Therefore, the user may use the writing device 100 to write on the transparent material layer 320b in collaboration with the image displayed by the display device 600.

In at least one embodiment of the invention, when the writing device contacts the writing surface, the writing device may leave the physical handwriting (ink handwriting) on the writing surface, and make the writing surface to generate a signal.

In at least one embodiment of the invention, a chance of wearing the physical ink handwriting written on the writing surface by the pen head is decreased, so as to improve the use convenience of the writing device.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A writing device, adapted to a writing surface having a capacitive touch function, comprising:
a conductive pen tube, containing a conductive ink adapted to be erased, wherein the conductive ink is electrically connected to the conductive pen tube, and at least a part of an outside surface of the conductive pen tube contacting a user is a conductor; and
a pen head, connected to the conductive pen tube, wherein the pen head is used for outputting the conductive ink to the writing surface to form a physical handwriting on the writing surface, wherein
when the pen head contacts the writing surface, the writing surface is configured to generate a signal.

2. The writing device as claimed in claim 1, wherein the pen head comprises a non-conductor or the pen head comprises a conductor.

3. The writing device as claimed in claim 1 or 2, further comprising a back cap, wherein the pen head and the back cap are respectively connected to two opposite ends of the conductive pen tube.

4. The writing device as claimed in claim 3, wherein the back cap comprises a conductor.

5. The writing device as claimed in any one of the preceding claims, further comprising an identification code disposed on the conductive pen tube.

6. A touch system, comprising a writing surface and at least one writing device as claimed in any one of the preceding claims.

7. The touch system as claimed in claim 6, further comprising a wiping device used for wiping the physical handwriting on the writing surface.

8. The touch system as claimed in claim 7, wherein the wiping device comprises:
a casing, comprising a conductive material;
a plurality of sensing elements, respectively electrically connected to the casing, and the sensing elements being separated from each other; and
a wiping body, located on the sensing elements, wherein at least a part of the wiping body comprises an insulation material, wherein
when the wiping device contacts the writing surface, at least two of the sensing elements make the writing surface to generate a wiping function command.

9. The touch system as claimed in claim 6, 7 or 8, further comprising a computer device electrically connected to the writing surface, wherein the computer device generates an electronic handwriting according to the signal.

10. The touch system as claimed in claim 9, further comprising at least two writing devices, wherein the pen heads of the at least two writing devices respectively have different sizes, and when the at least two writing devices contact the writing surface, signals of different signal intensities are generated, and the computer device is configured to identify the at least two writing devices according to the signals of different signal intensities.

11. The touch system as claimed in claim 9, further comprising at least two writing devices, wherein the conductive pen tubes of the at least two writing devices respectively have different electrical conductivity coefficients, and when the at least two writing devices contact the writing surface, signals of different signal intensities are generated, and the computer device is configured to identify the at least two writing devices according to the signals of different signal intensities.

12. The touch system as claimed in claim 9, further comprising at least two writing devices, wherein the conductive inks of the at least two writing devices respectively have different electrical conductivity coefficients, and when the at least two writing devices contact the writing surface, signals of different signal intensities are generated, and the computer device is configured to identify the at least two writing devices according to the signals of different signal intensities.

13. The touch system as claimed in any one of claims 9 -12, further comprising:
an identification code, disposed on the conductive pen tube; and
an identification code reader, electrically connected to the computer device, wherein the identification code reader is located within a position range capable of reading the identification code, wherein
when the pen head contacts the writing surface, the identification code reader is configured to read the identification code, and to identify a type of the writing device trough the computer device.

14. The touch system as claimed in any one of the preceding claims 6-13, wherein the writing surface comprises a touch device and a reflective material layer located on the touch device, and the touch system further comprises:
a projection apparatus, configured to project an image on the reflective material layer.

15. The touch system as claimed in any one of the preceding claims 6-14, wherein the writing surface comprises a touch device and a transparent material layer located on the touch device, and the touch system further comprises a display device, wherein the touch device is located between the display device and the transparent material layer.
